# EUROPEAN PATENT SPECIFICATION

(11) **EP 2 173 575 B1**
(45) Date of publication and mention of the grant of the patent: **13.07.2011**
(21) Application number: 08754573.7
(22) Date of filing: 20.05.2008
(51) Int. Cl.: B60C 11/12

(54) **TIRE INCLUDING SEGMENTED SIPES**
REIFEN MIT SEGMENTIERTEN LAMELLENEINSCHNITTEN
PNEU INCLUANT DES LAMELLES SEGMENTÉES

(30) Priority: 27.06.2007 US 769130
(43) Date of publication of application: 14.04.2010
(73) Proprietor: Bridgestone Americas Tire Operations, LLC, Nashville, TN 37214 (US)
(72) Inventor: STUHLDREHER, Terrence, Wadsworth, Ohio 44281 (US)
(74) Representative: Banzer, Hans-Jörg
(86) International application number: PCT/US2008/006447
(87) International publication number: WO 2009/005565

(56) References cited:
- EP-A- 0 952 011
- EP-A- 1 669 217
- EP-A- 1 733 900
- EP-A- 1 780 052
- EP-A- 1 787 826
- WO-A-94/21478
- JP-A- 2002 103 921

## Description

### FIELD OF INVENTION

The present application relates to a segmented sipe of a tire tread. More particularly, the application relates to sipes having two or more major segments connected by minor segments.

### BACKGROUND

Many motor vehicle tires have a circumferential tread provided with a plurality of circumferential grooves that define ribs therebetween. Typically, generally lateral slots can be provided in the ribs to form a-plurality of shaped blocks, known as tread blocks. These tread blocks can be distributed along the tread according to a specific pattern. Sipes, which are generally narrow slits cut into the tread, can be provided in the tread blocks to improve wet, snow, and ice traction of the tire. A tire according to the preamble of claim 1 is known from EP 0 952 011 A1 or WO 94/21478 A1.

### SUMMARY

According to the invention, a tire as defined in claim 1 and a vulcanization mold for the production of a tire as defined in claim 10 are provided. The dependent claims define preferred embodiments of the invention.

### BRIEF DESCRIPTION OF DRAWINGS

In the accompanying drawings, tires and tread patterns are illustrated that, together with the detailed description provided below, describe exemplary embodiments of the claimed invention.

In the following drawings and description, like elements are identified with the same reference numerals. The drawings are not to scale and the proportion of certain elements may be exaggerated for the purpose of illustration.

**Figure 1** illustrates a tire having a circumferential tread with blocks having straight sipes as viewed from the top surface of the tire;

**Figure 2** illustrates a prior art tread block having a straight sipe;

**Figure 3** illustrates a perspective view of a tread block having one embodiment of a radially segmented sipe;

**Figure 3A** illustrates a side planar view of a tread block having one embodiment of a radially segmented sipe;

**Figure 4** illustrates a perspective view of a tread block having one embodiment of a radially segmented sipe in a braking condition;

**Figure 5** illustrates a perspective view of a tread block having one embodiment of a radially segmented sipe in an acceleration condition;

**Figure 6** illustrates a perspective view of a tread block having an alternative embodiment of a radially segmented sipe;

**Figure 6A** illustrates a side planar view of a tread block having an alternative embodiment of a radially segmented sipe;

**Figure 7** illustrates a perspective view of a tread block having an alternative embodiment of a radially segmented sipe in a braking condition;

**Figure 8** illustrates a perspective view of a tread block having an alternative embodiment of a radially segmented sipe in an acceleration condition;

**Figure 9** illustrates a tire having a circumferential tread with a plurality of laterally segmented sipes;

**Figure 10** illustrates a perspective view of a tread block having a laterally segmented sipe;

**Figure 10A** illustrates a top planar view of a tread block having a laterally segmented sipe;

**Figure 11** illustrates a perspective view of a tread block having a laterally segmented sipe in a braking condition;

**Figure 12** illustrates a perspective view of a tread block having a laterally segmented sipe in an acceleration condition;

**Figure 13** illustrates a perspective view of a tread block having one embodiment of a segmented sipe that is segmented in two directions;

**Figure 14** illustrates a perspective view of a tread block having one embodiment of a sipe-segmented in two directions in a braking condition; and

**Figure 15** illustrates a perspective view of a tread block having one embodiment of a sipe segmented in two directions in an acceleration condition.

### DETAILED DESCRIPTION

The following includes definitions of selected terms employed herein. The definitions include various examples and/or forms of components that fall within the scope of a term. The examples are not intended to be limiting. Both singular and plural forms of terms may be within the definitions.

"Axial" or "axially" refer to a direction that is parallel to the axis of rotation of a tire.

"Circumferential" and "circumferentially" refer to a direction extending along the perimeter of the surface of an annular tread perpendicular to the axial direction.

"Equatorial plane" refers to the plane that is perpendicular to the tire's axis of rotation and passes through the center of the tire's tread.

"Footprint" refers to a surface area covered by a tire in contact with the surface.

"Lateral" and "laterally" refer to a direction along a tread of a tire going from one sidewall of the tire to the other sidewall.

"Radial" and "radially" refer to a direction that is perpendicular to the axis of rotation of a tire.

"Rib" or "ribs" define the circumferential extending strip or strips of rubber on the tread that is defined by at least one circumferential groove and either a second wide groove or a lateral edge of the tread.

"Tread" refers to that portion of a tire that comes into contact with the road under a normal load.

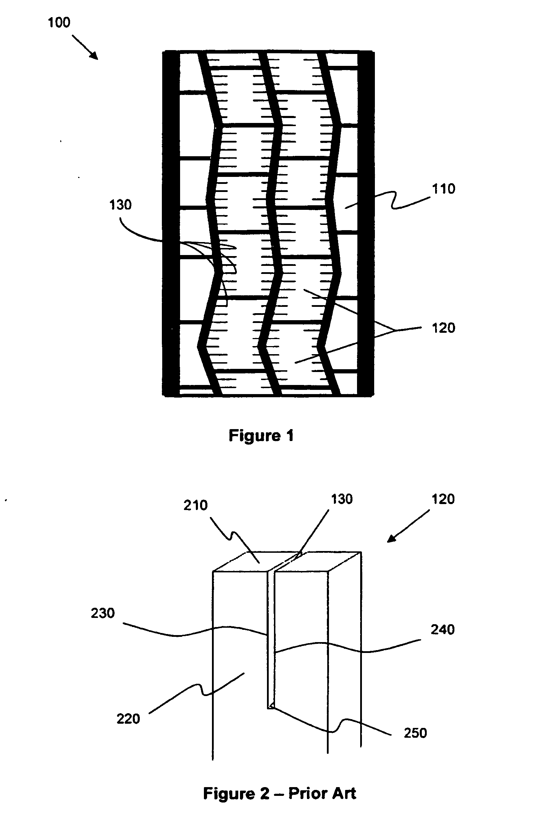

**Figure 1** illustrates a prior art tire **100** having a circumferential tread **110** with a plurality of tread blocks **120.** Each of the tread blocks **120** includes one or more sipes **130.** In alternative embodiments, sipes may be disposed in ribs of a tire tread, instead of blocks. In the illustrated embodiment, the sipes **130** are straight and extend in a lateral direction. Other known prior art sipes include curved and wave-shaped sipes. Additionally, other known prior art sipes may extend circumferentially, or at an acute angle with respect to the circumferential direction of the tire.

**Figure 2** illustrates a close up, perspective view of a prior art tread block **120** having a sipe **130.** The block **120** may be any regular or irregular polyhedron and includes at least a top surface **210** defining a top surface of the circumferential tread **110** of the tire **100** and a side surface **220** defining a groove in the circumferential tread **110.** The sipe **130** is a void in the tread block **120** defined by a plurality of walls. Specifically, the sipe **130** is defined by a first elongated wall **230** that extends radially inward from the top surface **210** of the tread block **120,** forming an edge with the top surface **210** and additionally forming an edge with a side surface **220.** The sipe **130** is further defined by a second elongated wall **240** that extends radially inward from the top surface **210** of the tread block **120,** forming an edge with the top surface **210** and additionally forming an edge with the side surface **220.** Finally, the sipe **130** is also defined by a bottom surface **250** that extends laterally from the side surface **220** of the tread block **120,** forming edges with the side surface **220,** the first elongated wall **230,** and the second elongated wall **240.** In the illustrated embodiment, the first elongated wall **230** is substantially parallel to the second elongated wall **240** and the bottom surface **250** is orthogonal to each of the first and second elongated walls **230, 240.**

Although a sipe is a void defined by walls of a tread (or a tread block), it is convenient to describe a sipe as if it were a physical object. For example, in **Figure 2****,** the sipe **130** may be described as a straight line. It should be understood that describing a shape or a profile of a sipe is simply a shorthand way to describe a shape of a void defined by walls in a tread or tread block.

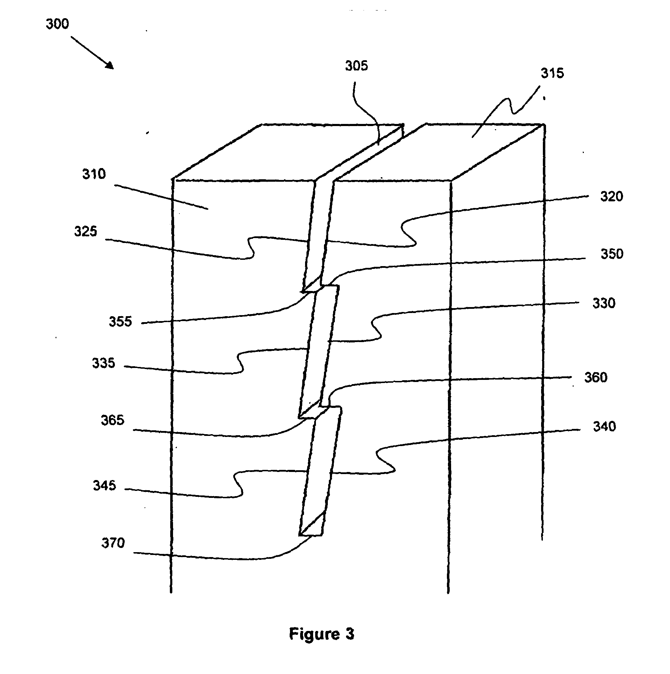

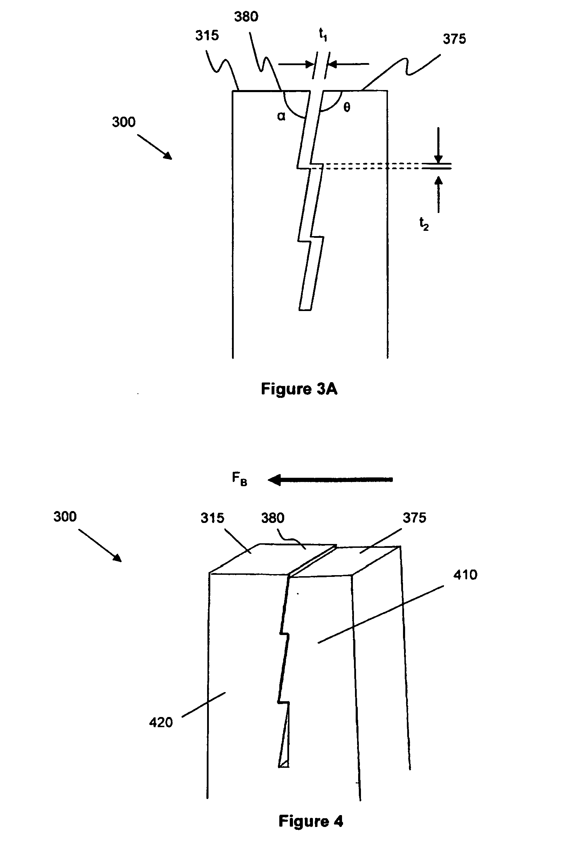

**Figure 3** illustrates a close up, perspective view of a tread block **300** having one embodiment of a radially segmented sipe **305.** The tread block **300** may be any regular or irregular polyhedron and includes at least a side surface **310** defining a groove in a circumferential tread of a tire and a top surface **315** defining a top surface of the circumferential tread. The radially segmented sipe **305** is segmented in an inward direction (i.e., towards the radius of the tire). In other words, the radially segmented sipe has segmented opening as viewed from a side surface **310** of the tread block **300.** It should be understood that a radially segmented sipe need not extend in a truly radial direction (i.e., perpendicular to the axis of the tire). In the illustrated embodiment, the radially segmented sipe **305** appears straight when viewed from a top surface **315** of the tread block **300.** In alternative embodiments (not shown), the radially segmented sipe appears curved or angled when viewed from a top surface of the tread block.

When the tire rotates, the "top surface" **315** may be located at the side or the bottom of the tire. However, it should be understood that the terms "top" and "bottom" are used to describe orientation of the tread block as it is illustrated in **Figure 3****.**

The radially segmented sipe **305** is a void in the tread block **300** defined by a plurality of walls. In the illustrated embodiment, the radially segmented sipe **305** is defined by a first elongated wall **320** that extends inward from the top surface **315** of the tread block **300,** thereby forming an edge with the top surface **315,** and further extending laterally from the side surface **310,** thereby forming an edge with the side surface **310.** The radially segmented sipe **305** is further defined by a second elongated wall **325** that extends radially inward from the top surface **315** of the tread block **300,** thereby forming an edge with the top surface **315,** further extending laterally from the side surface **310,** thereby forming an edge with the side surface **310.** The radially segmented sipe **305** is further defined by a third elongated wall **330,** a fourth elongated wall **335,** a fifth elongated wall **340,** and a sixth elongated wall **345,** each of which extends laterally from the side surface **310** of the tread block **300** to form an edge with the side surface **310.**

Additionally, the radially segmented sipe **305** is defined by a plurality of minor walls that connect the elongated walls, including a first minor wall **350** extending from a bottom end of the first elongated wall **320** to a top end of the third elongated wall **330;** a second minor wall **355** extending from a bottom end of the second elongated wall **325** to a top end of the fourth elongated wall **335;** a third minor wall **360** extending from a bottom end of the third elongated wall **330** to a top end of the fifth elongated wall **340;** a fourth minor wall **365** extending from a bottom end of the fourth elongated wall **335** to a top end of the sixth elongated wall **345;** and a fifth minor wall **370** extending from a bottom end of the fifth elongated wall **340** to a bottom end of the sixth elongated wall **345.** As can be seen in **Figure 3****,** the elongated walls **320, 325, 330, 335, 340, 345** have a substantially longer length than the minor walls **350, 355, 360, 365, 370.**

In the illustrated embodiment, each of the elongated walls **320, 325, 330, 335, 340, 345** are substantially parallel to each other. Similarly, each of the minor walls **350, 355, 360, 365, 370** are substantially parallel to each other. Additionally, each of the minor walls **350, 355, 360, 365, 370** are substantially parallel to the top surface **315** of the tread block **300** and are at acute angles with respect to the elongated walls **320, 325, 330, 335, 340, 345.** In an alternative embodiment (not shown), the elongated walls are at acute angles with respect to each other. In another alternative embodiment (not shown), the minor walls are at acute angles with respect to each other. In yet another alternative embodiment (not shown), the minor walls are at acute angles with respect to the top surface **315** of the tread block **300.**

With continued reference to **Figure 3****,** the sipe **305** may be described as having a segmented shape. Specifically, the sipe **305** may be described as having a "ratchet" or "lightning bolt" shape. In the illustrated embodiment, the radially segmented sipe **305** includes three major segments and two minor segments, each of which is visible when viewed from the side surface **310** of the tread block **300.** In the illustrated embodiment, the first and second elongated walls **320, 325** define a first major segment, the third and fourth elongated walls **330, 335** define a second major segment, and the fifth and sixth elongated walls **340, 345** define a third major segment. Further, the first and second minor walls **350, 355** define a first minor segment having a first end connected to a bottom end of the first major segment and a second end connected to a top end of the second major segment. In other words, the first minor segment extends from the bottom of the first major segment to the top of the second major segment. Additionally, the third and fourth minor walls **360, 365** define a second minor segment having a first end connected to a bottom end of the second major segment and a second end connected to a top end of the third major segment. In other words, the second minor segment extends from the bottom of the second major segment to the top of the third major segment.

**Figure 3A** illustrates a side planar view of one embodiment of the tread block **300.** As can be seen in the illustrated embodiment, the first, second, and third major segments are substantially parallel to each other. In this embodiment, the radially segmented sipe forms an obtuse angle θ with a forward portion **375** of the top surface **315** of the tread block **300** and an acute angle α with a rearward portion **380** of the top surface **315** of the tread block **300.** Further, the first minor segment is substantially parallel to the second minor segment. Additionally, the first and second minor segments are substantially parallel to the top surface **315** of the tread block **300** and are at acute angles with respect to the major segments. In an alternative embodiment (not shown), the first minor segment is at an acute angle with respect to the second minor segment. In another alternative embodiment (not shown), the first and second minor segments are substantially orthogonal to the major segments. In yet another alternative embodiment (not shown), the first and second minor segments are at obtuse angles with respect to the major segments. In yet another alternative embodiment (not shown), at least two of the major segments are at acute angles with respect to each other.

In the illustrated embodiment, the major segments have a substantially longer length than the minor segments. Additionally, the major segments each have substantially the same length. Similarly, the first minor segment has the same length as the second minor segment. In an alternative embodiment (not shown), at least one of the major segments has a different length from the other major segments. In another alternative embodiment (not shown), the first minor segment has a different length from the second minor segment.

When the tire is at rest, as shown in **Figure 3A****,** the major segments of the radially segmented sipe have a thickness **t₁** and the minor segments have a thickness **t₂.** In the illustrated embodiment, the thickness **t₁** of the first major segment is substantially the same as the second and third major segments. Further, the thickness **t₂** of the first minor segment is substantially the same as the thickness of the second minor segment. In the illustrated embodiment, the thickness **t₂** of the minor segments is less than the thickness **t₁** of the major segments. In one embodiment, the thickness **t₁** of each major segment is about 0,076 cm (0.030 inches) to about 0,152 cm (0.060 inches) and the thickness **t₂** of each minor segment is about 0,02 cm (0.008 inches) to about 0,064 cm (0.025 inches).

In an alternative embodiment (not shown), the thickness **t₂** of the minor segments is equal to the thickness **t₁** of the major segments. In another alternative embodiment (not shown), the thickness of at least one of the major segments is different from the thickness of another major segment. In another alternative embodiment (not shown), the thickness of the first minor segment is different from the thickness of the second minor segment.

**Figure 4** illustrates one embodiment of the tread block **300** when a braking force **F_{B}** is applied. With the above described configuration, the tread block **300** is configured to deform when a braking force **F_{B}** is applied, such that the thickness of the radially segmented sipe **305** is substantially reduced. In the illustrated embodiment, a forward portion **410** of the tread block **300** deforms and is biased towards a rearward portion **420,** such that the first elongated wall **320** is moved towards the second elongated wall **325,** reducing the thickness of the first major segment. Further, the third elongated wall **330** is moved towards the fourth elongated wall **335,** reducing the thickness of the second major segment. Additionally, the fifth elongated wall **340** is moved towards the sixth elongated wall **345,** reducing the thickness of the third major segment.

With continued reference to **Figure 4****,** the geometry of the radially segmented sipe 300 is such that when a braking force **F_{B}** is applied to the tread block **300,** the tread block **300** is deformed such that the first minor wall **350** is moved towards the second minor wall **355,** reducing the thickness of the first minor segment. Further, the third minor wall **360** is moved towards the fourth minor wall **365,** reducing the thickness of the second minor segment.

In the illustrated embodiment, when a sufficient braking force **F_{B}** is applied to a tire, the first elongated wall **320** contacts the second elongated wall **325,** substantially reducing the thickness of the first major segment to zero. In other words, the first major segment is eliminated. Similarly, the third elongated wall **330** contacts the fourth elongated wall **335,** substantially reducing the thickness of the second major segment to zero. In other words, the second major segment is eliminated. Further, the first minor wall **350** contacts the second minor wall **355,** substantially reducing the thickness of the first minor segment to zero. In other words, the first minor segment is eliminated. Similarly, the third minor wall **360** contacts the fourth minor wall **365,** substantially reducing the thickness of the second minor segment to zero. In other words, the second minor segment is eliminated. It should be understood that when a lesser braking force is applied, the tread block **300** may be deformed such that the segments of the radially segmented sipe **305** are reduced without being eliminated. Further, in an alternative embodiment (not shown), the tread block **300** may be sufficiently rigid such that the segments of the radially segmented sipe **305** are never eliminated, but merely reduced.

As a result of the above, the sipe opening in the top surface **315** closes when a sufficient braking force **F_{B}** is applied, and the forward portion **375** of the top surface **315** is only slightly displaced with respect to the rearward portion **380** of the top surface **315.** In one embodiment, the displacement of the forward portion **375** relative to the rearward portion **380** is equal to or less than the thickness **t₂** of the minor segments. Because the first minor wall **350** is contacting the second minor wall **355** and the third minor wall **360** is contacting the fourth minor wall **365,** the radially segmented sipe **305** is closed and the tread block **300** cannot be further deformed. In other words, the sipe is locked and the tread block **300** becomes rigid such that the forward portion **375** of the top surface **315** cannot be further displaced. Therefore, when a braking force is applied to a tire, more of the tread surface stays in contact with a road surface. This results in improved tire traction for braking, especially on a dry surface, thus reducing stopping distance.

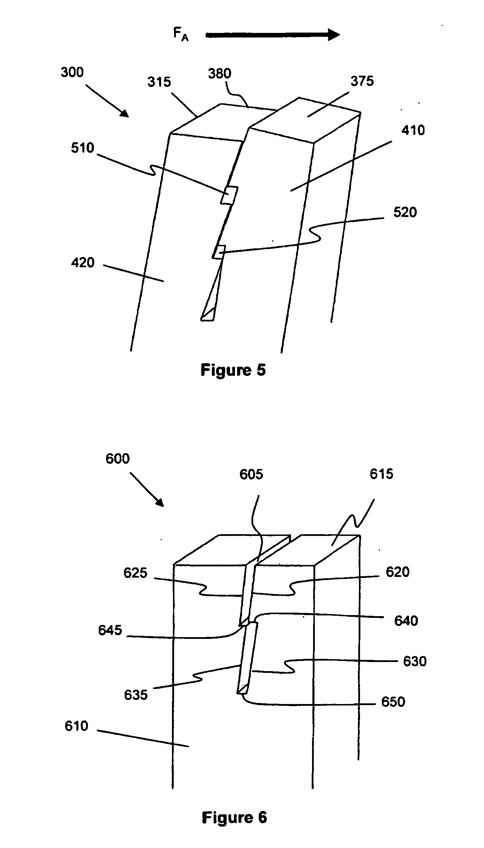

**Figure 5** illustrates one embodiment of the tread block **300** when an acceleration force **F_{A}** is applied to a tread block **300.** The tread block **300** is configured to deform when an acceleration force **F_{A}** is applied, such that the radially segmented sipe **305** is not eliminated. As can be seen in the illustrated embodiment, the rearward portion **420** of the tread block **300** deforms and moves toward the forward portion **410** such that the second elongated wall **325** is moved towards the first elongated wall **320,** reducing the thickness of the first major segment. Further, the fourth elongated wall **335** is moved towards the third elongated wall **330,** reducing the thickness of the second major segment. Additionally, the sixth elongated wall **345** is moved towards the fifth elongated wall **340,** reducing the thickness of the first major segment.

In the illustrated embodiment, when a sufficient acceleration force **F_{A}** is applied to a tire, the second elongated wall **325** contacts the first elongated wall **320,** substantially reducing the thickness of the first major segment to zero. In other words, the first major segment is eliminated. Similarly, the third elongated wall **335** contacts the fourth elongated wall **330,** substantially reducing the thickness of the second major segment to zero. In other words, the second major segment is eliminated. It should be understood that when a lesser acceleration force is applied, the tread block **300** may be deformed such that the elongated segments of the radially segmented sipe **305** are reduced, but not eliminated. Further, in an alternative embodiment (not shown), the tread block **300** may be sufficiently rigid such that the elongated segments of the radially segmented sipe **305** are never eliminated, but merely reduced.

With continued reference to **Figure 5****,** the geometry of the radially segmented sipe **300** is such that when an acceleration force **F_{A}** is applied to a tread block **300,** the tread block **300** is deformed such that the rearward portion **420** of the tread block **300** biases the forward portion **410** in a forward direction. Therefore, the first minor wall **350** and the second minor wall **355** move away from each other, increasing the thickness of the first minor segment and creating a first enlarged opening **510.** Further, the third minor wall **360** and the fourth minor wall **365** move away from each other, increasing the thickness of the second minor segment and creating a second enlarged opening **520.** In an alternative embodiment (not shown), the geometry of the radially segmented sipe **305** may be such that the minor segments maintain the same thickness when an acceleration force is applied to a tire.

In the above described embodiment, when an acceleration force **F_{A}** is applied to a tire, the forward portion **375** of the top surface **315** is displaced relative to the rear portion **380.** The sipe does not lock into position, so the tread block **300** has less rigidity when it is in an acceleration condition. When the acceleration force is increased, the tread block **300** is further deformed, and the displacement of the forward portion **375** is increased, thereby reducing the surface area of the tread that is exposed to a road surface. This results in improved tire traction for accelerating in snowy, wet, or other slippery conditions.

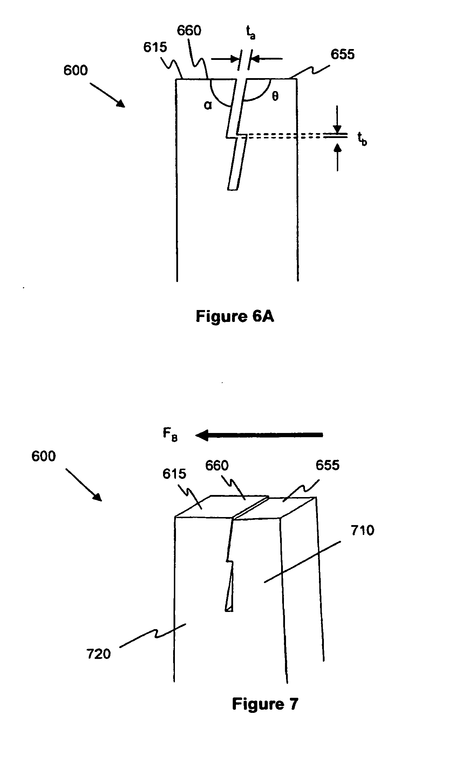

With attention now to **Figure 6****,** a close up, perspective view is illustrated of a tread block **600** having an alternative embodiment of a radially segmented sipe **605.** The tread block **600** may be any regular or irregular polyhedron and includes at least a side surface **610** defining a groove in a circumferential tread of a tire and a top surface **615** defining a top surface of the circumferential tread. In the illustrated embodiment, the radially segmented sipe **605** is similar to the segmented sipe illustrated in **Figures 3-5****,** except that it includes two major segments instead of three, and one minor segment instead of two. Specifically, the tread block **600** includes first and second elongated walls **620, 625** that define a first major segment, and third and fourth elongated walls **630, 635** that define a second major segment. Further, the tread block **600** includes first and second minor walls **640, 645** that define a minor segment having a first end connected to a bottom end of the first major segment and a second end connected to a top end of the second major segment, such that each of the segments is visible when viewed from the side surface of the tread block **600.** In other words, the minor segment extends from the bottom of the first major segment to the top of the second major segment.

Additionally, the radially segmented sipe **605** includes a third minor wall **650** that has a first end connected to a bottom end of the third elongated wall **630** and a second end connected to a bottom end of the fourth elongated wall **635.** The elongated walls **620, 625, 630, 635** are substantially longer than the minor walls **640, 645, 650.** The illustrated tread block **600** of **Figure 6** is otherwise substantially similar to the tread block **300** of **Figure 3****.**

**Figure 6A** illustrates a side planar view of one embodiment of the tread block **600.** As can be seen in the illustrated embodiment, the first and second major segments are substantially parallel to each other. In this illustrated embodiment, the first major segment forms an obtuse angle θ with a forward portion **655** of the top surface **615** of the tread block **600** and an acute angle α with a rearward portion **660** of the top surface **615** of the tread block **600.** Additionally, the minor segment is substantially parallel to the top surface **615** of the tread block **600** and is at acute angles with respect to the first and second major segments. In an alternative embodiment (not shown), the minor segment is substantially orthogonal to the first and second major segments. In yet another alternative embodiment (not shown), the minor segment is at obtuse angles with respect to the first and second major segments. In yet another alternative embodiment (not shown), the first major segment is at an acute angle with respect to the second major segment.

In the illustrated embodiment, the major segments have a substantially longer length the minor segment. Additionally, the first major segment has the same length as the second major segment. In an alternative embodiment (not shown), the first major segment has a different length from the second major segment.

With continued reference to **Figure 6A****,** the major segments of the segmented sipe have a thickness **tₐ** when the tire is at rest and the minor segment has a thickness **t_{b}** when the tire is at rest. In the illustrated embodiment, the thickness **tₐ** of the first major segment is substantially the same as the thickness of the second major segment. In the illustrated embodiment, the thickness **t_{b}** of the minor segment is less than the thickness **tₐ** of the major segments. In one embodiment, the thickness **tₐ** of each major segment is about 0,076 cm (0.030 inches) to about 0,152 cm (0.060 inches) and the thickness **t_{b}** of the minor segment is about 0,02 cm (0.008 inches) to about 0,064 (0.025 inches).

In an alternative embodiment (not shown), the thickness **t_{b}** of the minor segment is equal to the thickness **tₐ** of the major segments. In another alternative embodiment (not shown), the thickness of the first major segment is different from the thickness of the second major segment.

In the illustrated embodiment, the minor segment and the first and second major segments are substantially straight. In an alternative embodiment (not shown), at least one of the segments is curved.

**Figure 7** illustrates one embodiment of the tread block **600** when a braking force **F_{B}** is applied. With the above described configuration, the tread block **600** is configured to deform when a braking force **F_{B}** is applied, such that the thickness of the radially segmented sipe **605** is substantially reduced. In the illustrated embodiment, when a braking force **F_{B}** is applied, a forward portion **710** of the tread block **600** deforms such that the first elongated wall **620** is moved towards the second elongated wall **625,** reducing the thickness of the first major segment. Further, the first minor wall **640** is moved towards the second minor wall **645,** thereby reducing the thickness of the minor segment.

In the illustrated embodiment, when a sufficient braking force **F_{B}** is applied to a tire, the first elongated wall **620** contacts the second elongated wall **625,** substantially reducing the thickness of the first major segment to zero. In other words, the first major segment is eliminated Further, the first minor wall **640** contacts the second minor wall **645,** substantially reducing the thickness of the minor segment to zero. In other words, the second minor segment is eliminated. It should be understood that when a lesser braking force is applied, the tread block **600** may be deformed such that the segments of the radially segmented sipe **605** are reduced, but not eliminated. Further, in an alternative embodiment (not shown), the tread block **600** may be sufficiently rigid such that the segments of the radially segmented sipe **605** are never eliminated, but merely reduced.

As a result of the above, the sipe opening in the top surface **615** closes, and the forward portion **655** of the top surface **615** is only slightly displaced with respect to the rearward portion **660** of the top surface **615.** In one embodiment, the displacement of the forward portion **655** relative to the rearward portion **660** is equal to or less than the thickness **t_{b}** of the minor segment. Because the first minor wall **640** is contacting the second minor wall **645,** the radially segmented sipe **605** is closed and the tread block **600** cannot be further deformed. In other words, the sipe is locked and the tread block **600** becomes rigid such that the forward portion **655** of the top surface **615** cannot be further displaced. Therefore, when a braking force is applied to a tire, more of the tread surface stays in contact with a road surface. This results in improved tire traction for braking, especially on a dry surface, thus reducing stopping distance.

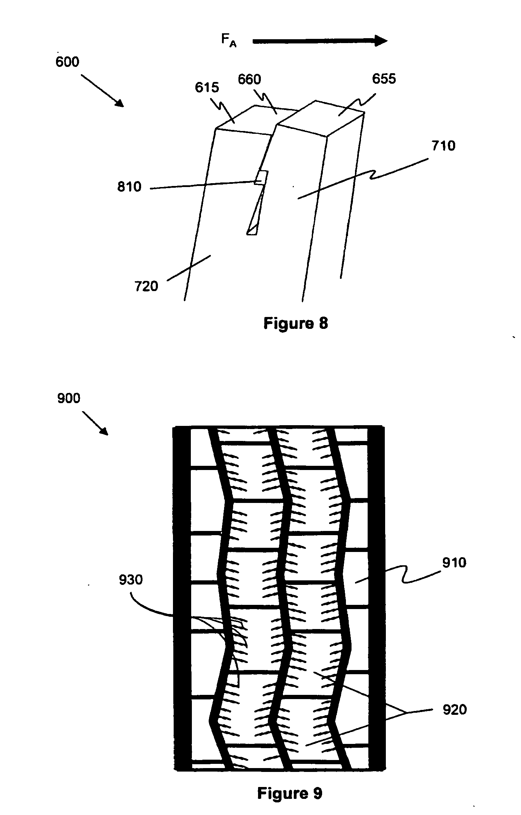

**Figure 8** illustrates one embodiment of the tread block **600** when an acceleration force **F_{A}** is applied. As can be seen in the illustrated embodiment, the rearward portion **720** of the tread block **600** deforms such that the second elongated wall **625** is moved towards the first elongated wall **620,** reducing the thickness of the first major segment. Further, the fourth elongated wall **635** is moved towards the third elongated wall **630,** reducing the thickness of the second major segment.

In the illustrated embodiment, when a sufficient acceleration force **F_{A}** is applied to a tire, the second elongated wall **625** contacts the first elongated wall **620,** substantially reducing the thickness of the first major segment to zero. In other words, the first major segment is eliminated. It should be understood that when a lesser acceleration force is applied, the tread block **600** may be deformed such that the first major segment is reduced, but not eliminated. Further, in an alternative embodiment (not shown), the tread block **600** may be sufficiently rigid such that the first major segment is never eliminated, but merely reduced.

With continued reference to **Figure 8****,** the geometry of the radially segmented sipe **605** is such that when an acceleration force **F_{A}** is applied to the tread block **600,** the tread block **600** is deformed such that the rearward portion **720** of the tread block **600** biases the forward portion **710** in a forward direction. Therefore, the first minor wall **640** and the second minor wall **645** move away from each other, increasing the thickness of the minor segment. In an alternative embodiment (not shown), the geometry of the sipe **600** may be such that the minor segment maintains the same thickness when an acceleration force is applied to a tire.

In the above described embodiment, when an acceleration force **F_{A}** is applied to a tire, the forward portion **655** of the top surface **615** is displaced relative to the rear portion **660.** The sipe does not lock into position, so the tread block **600** has less rigidity when it is in an acceleration condition. When the acceleration force is increased, the tread block **600** is further deformed, and the displacement of the forward portion **655** is increased, thereby reducing the surface area of the tread that is exposed to a road surface. This results in improved tire traction for accelerating in snowy, wet, or other slippery conditions.

Although only radially segmented sipes having two and three major segments have been illustrated, it should be understood that in alternative embodiments (not shown), a segmented sipe may have four or more major segments. For example, in one embodiment (not shown), a radially segmented sipe may have four major segments and three minor segments. In another embodiment (not shown), a radially segmented sipe may have five major segments and four minor segments. In yet another embodiment, a radially segmented sipe may have **n** major segments and **n-1** minor segments. It should also be understood that a tire may have sipes of varying length with a varying number of segments. For example, in one embodiment (not shown), half of the sipes of a tire may have two major segments and half of the sipes may have three major segments.

**Figure 9** illustrates a tire **900** having a circumferential tread **910** with a plurality of tread blocks **920.** Each of the tread blocks **920** includes one or more laterally segmented sipes **930.** The segments of the sipe are in a lateral direction. In other words, the sipes **930** have segmented openings as viewed from a top surface of the tire **900.** In an alternative embodiment (not shown), a tire having a circumferential tread with a plurality of ribs includes one or more laterally segmented sipes disposed in the ribs, rather than blocks.

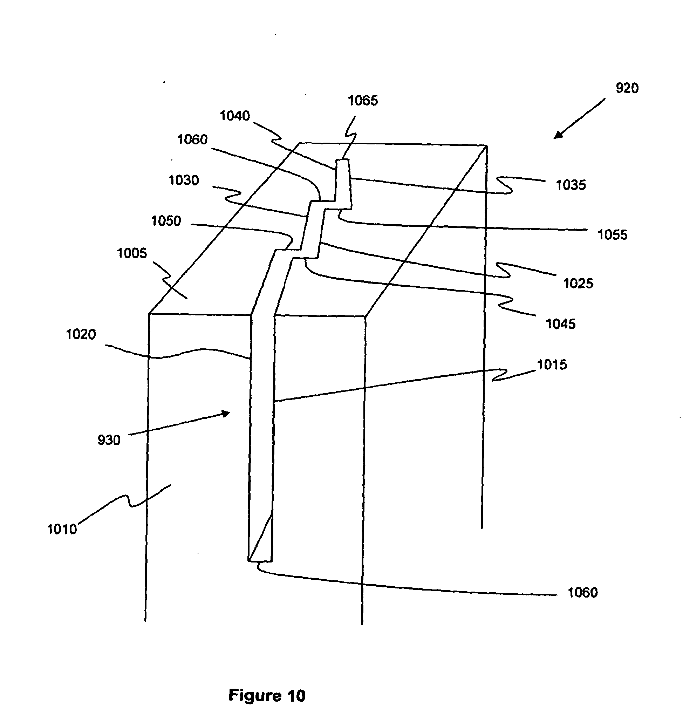

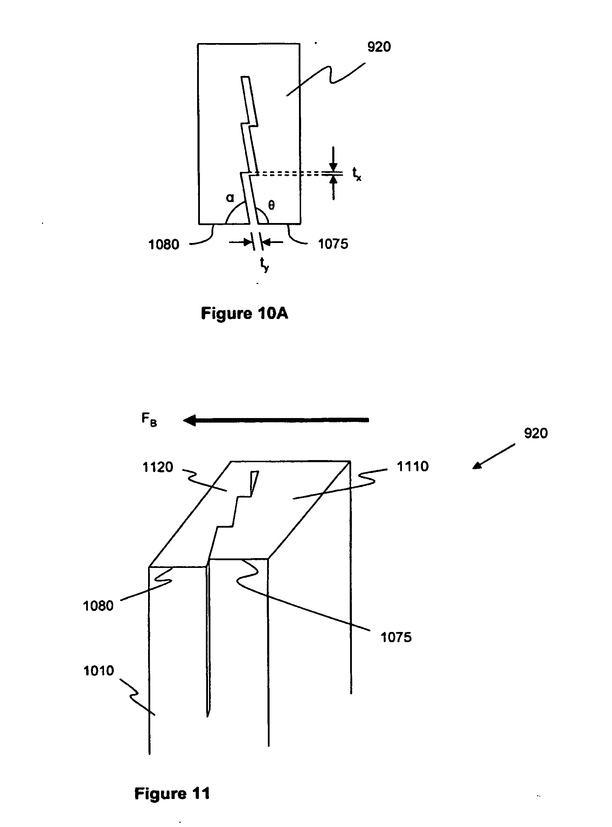

**Figure 10** illustrates a close up, perspective view of a tread block **920** having a laterally segmented sipe **930.** The block **920** may be any regular or irregular polyhedron and includes at least a top surface **1005** defining a top surface of the circumferential tread **910** of the tire **900** and a side surface **1010** defining a groove in the circumferential tread **910.** The laterally segmented sipe **930** is a void in the tread block **920** defined by a plurality of walls. In the illustrated embodiment, the laterally segmented sipe **930** is defined by a first elongated wall **1015** that extends radially inward from the top surface **1005** of the tread block **920,** thereby forming an edge with the top surface **1005** and additionally forming an edge with the side surface **1010.** The laterally segmented sipe **930** is further defined by a second elongated wall **1020** that extends radially inward from the top surface **1005** of the tread block **920,** thereby forming an edge with the top surface **1005** and additionally forming an edge with the side surface **1010.** The laterally segmented sipe **930** is further defined by a third elongated wall **1025,** a fourth elongated wall **1030,** a fifth elongated wall **1035,** and a sixth elongated wall **1040,** each of which extends-radially inward from the top surface **1005** of the-tread block **120** to form an edge with the top surface **1005.**

Additionally, the laterally segmented sipe **930** is defined by a plurality of minor walls that connect the elongated walls, including a first minor wall **1045** extending from an end of the first elongated wall **1015** to the third elongated wall **1025;** a second minor wall **1050** extending from an end of the second elongated wall **1020** to an end of the fourth elongated wall **1030;** a third minor wall **1055** extending from an end of the third elongated wall **1025** to an end of the fifth elongated wall **1035;** a fourth minor wall **1060** extending from an end of the fourth elongated wall **1030** to an end of the sixth elongated wall **1040;** and a fifth minor wall **1065** extending from an end of the fifth elongated wall **1035** to an end of the sixth elongated wall **1040.** As can be seen in **Figure 10****,** the elongated walls **1015, 1020, 1025, 1030, 1035, 1040** have a substantially longer length than the minor walls **1045, 1050, 1055, 1060, 1065.** As shown in **Figure 10****,** the laterally segmented sipe is further defined by a bottom surface **1070.**

In the illustrated tread block, each of the elongated walls **1015, 1020, 1025, 1030, 1035, 1040** are substantially parallel to each other. Similarly, each of the minor walls **1045, 1050, 1055, 1060, 1065** are substantially parallel to each other. Additionally, each of the minor walls **1045, 1050, 1055, 1060, 1065** are substantially parallel to an equatorial plane of the tire and are at acute angles with respect to the elongated walls **1015, 1020, 1025, 1030, 1035, 1040.** In an alternative example (not shown), the elongated walls are at acute angles with respect to each other. In another alternative example (not shown), the minor walls are at acute angles with respect to each other. In yet another alternative example (not shown), the minor walls are at acute angles with respect to the equatorial plane of the tire.

With continued reference to **Figure 10****,** the laterally segmented sipe **930** may be described as having a segmented shape. Specifically, the sipe **930** may be described as having a "ratchet" or "lightning bolt" shape. In the illustrated embodiment, the laterally segmented sipe includes three major segments and two minor segments, each of which is visible when viewed from the top surface of the tread block **920.** In the illustrated embodiment, the first and second elongated walls **1015, 1020** define a first major segment, the third and fourth elongated walls **1025, 1030** define a second major segment, and the fifth and sixth elongated walls **1035, 1040** define a third major segment. Further, the first and second minor walls **1045**, **1050** define a first minor segment having a first end connected to an end of the first major segment and a second end connected to an end of the second major segment. In other words, the first minor segment extends from an end of the first major segment to an end of the second major segment. Additionally, the third and fourth minor walls **1055, 1060** define a second minor segment having a first end connected to an end of the second major segment and a second end connected to an end of the third major segment. In other words, the second minor segment extends from the second major segment to the third major segment.

**Figure 10A** illustrates a top planar view of one example of the tread block **920.** As can be seen in the illustrated embodiment, the first, second, and third major segments are substantially parallel to each other. Further, the first minor segment is substantially parallel to the second minor segment. Additionally, the first and second minor segments are substantially parallel to the circumferential direction of the tire and are at acute angles with respect to the major segments. In an alternative example (not shown), the first and second minor segments are substantially parallel to the side surface of the tread block. In another alternative example (not shown), the first minor segment is at an acute angle with respect to the second minor segment. In yet another alternative example (not shown), the first and second minor segments are substantially orthogonal to the major segments. In yet another alternative example (not shown), the first and second minor segments are at obtuse angles with respect to the major segments. In yet another alternative example (not shown), at least two of the major segments are at acute angles with respect to each other.

In the illustrated example, the major segments have a substantially longer length than the minor segments. Additionally, the major segments each have substantially the same length. Similarly, the first minor segment has the same length as the second minor segment. In an alternative example (not shown), at least one of the major segments has a different length from the other major segments. In another alternative example (not shown), the first minor segment has a different length from the second minor segment.

When the tire is at rest, as shown in **Figure 10A****,** the minor segments have a thickness **tₓ** the major segments of the laterally segmented sipe have a thickness **t_{y}.** In the illustrated example, the thickness **t_{y}** of each major segment is substantially the same as the other major - segments. Further, the thickness **tₓ** of the first minor segment is substantially the same as the thickness of the second minor segment. In the illustrated example, the thickness **tₓ** of the minor segments is less than the thickness **t_{y}** of the major segments. In one example, the thickness **t_{y}** of each major segment is about 0,076 cm (0.030 inches) to about 0,152 cm (0.060 inches) and the thickness **tₓ** of each minor segment is about 0,02 cm (0.008 inches) to about 0,064 cm (0.025 inches).

In an alternative example (not shown), the thickness **tₓ** of the minor segments is equal to the thickness **t_{y}** of the major segments. In another alternative example (not shown), the thickness of at least one of the major segments is different from the thickness of another major segment. In another alternative example (not shown), the thickness of the first minor segment is different from the thickness of the second minor segment. As can be seen in the illustrated example, the first major segment forms an obtuse angle θ with a forward portion **1075** of the side surface **1010** of the tread block **920** and an acute angle α with a rearward portion **1080** of the side surface **1010** of the tread block **920.**

**Figure 11** illustrates one example of the tread block **920** when a braking force **F_{B}** is applied. With the above described configuration, the tread block **920** is configured to deform when a braking force is applied, such that the thickness of the sipe is substantially reduced. In the illustrated example, a forward portion **1110** of the tread block **920** deforms and is biased towards a rearward portion **1120,** such that the first elongated wall **1015** is moved towards the second elongated wall **1020,** reducing the thickness of the first major segment. Further, the third elongated wall **1025** is moved towards the fourth elongated wall **1030,** reducing the thickness of the second major segment. Additionally, the fifth elongated wall **1035** is moved towards the sixth elongated wall **1040,** reducing the thickness of the third major segment.

With continued reference to **Figure 11****,** the geometry of the laterally segmented sipe **930** is such that when a braking force **F_{B}** is applied to a tread block **920,** the tread block **920** is deformed such that the first minor wall **1045** is moved towards the second minor wall **1050,** reducing the thickness of the first minor segment. Further, the third minor wall **1055** is moved towards the fourth minor wall **1060,** reducing the thickness of the second minor segment.

In the illustrated example, when a sufficient braking force **F_{B}** is applied to a tire, the first elongated wall **1015** contacts the second elongated wall **1020,** substantially reducing the thickness of the first major segment to zero. In other words, the first major segment is eliminated. Similarly, the third elongated wall **1025** contacts the fourth elongated wall **1030,** substantially reducing the thickness of the second major segment to zero. In other words, the second major segment is eliminated. Further, the first minor wall **1045** contacts the second minor wall **1050,** substantially reducing the thickness of the first minor segment to zero. In other words, the first minor segment is eliminated. Similarly, the third minor wall **1055** contacts the fourth minor wall **1060,** substantially reducing the thickness of the second minor segment to zero. In other words, the second minor segment is eliminated. It should be understood that when a lesser braking force is applied, the tread block **920** may be deformed such that the segments of the sipe **930** are reduced without being eliminated. Further, in an alternative example (not shown), the tread block **920** may be sufficiently rigid such that the segments of the sipe **930** are never eliminated, but merely reduced.

As a result of the above, when a braking force is applied to a tire, the openings defining the sipe are greatly reduced, or in some cases even substantially eliminated. Therefore, more of the tread surface stays in contact with a road surface. This results in improved tire traction for braking, especially on a dry surface, thus reducing stopping distance.

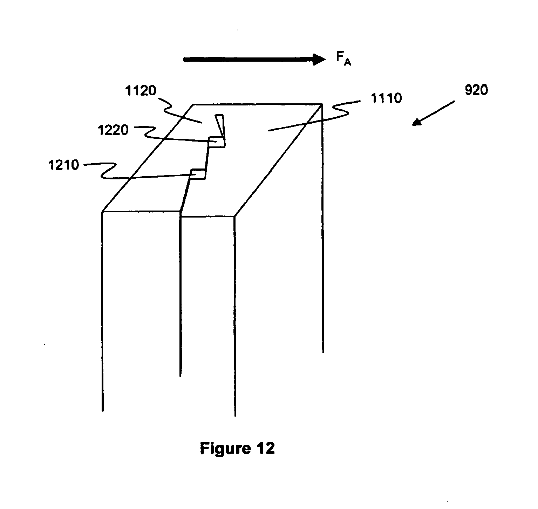

**Figure 12** illustrates one example of the tread block **920** when an acceleration force **F_{A}** is applied to a tread block **920.** The tread block **920** is configured to deform when an acceleration force is applied, such that the sipe is not eliminated. As can be seen in the illustrated example, that rearward portion **1120** of the tread block **920** deforms and is biased towards the forward portion **1110** such that the second elongated wall **1020** is moved towards the first elongated wall **1015,** reducing the thickness of the first major segment. Further, the fourth elongated wall **1030** is moved towards the third elongated wall **1025,** reducing the thickness of the second major segment. Additionally, the sixth elongated wall **1040** is moved towards the fifth elongated wall **1035,** reducing the thickness of the first major segment.

With continued reference to **Figure 12****,** the geometry of the laterally segmented sipe **930** is such that when an acceleration force **F_{A}** is applied to a tread block **920,** the tread block **920** is deformed such that the first minor wall **1045** and the second minor wall **1050** move away from each other, increasing the thickness of the first minor segment and creating a first enlarged opening **1210.** Further, the third minor wall **1055** and the fourth minor wall **1060** move away from each other, increasing the thickness of the second minor segment and creating a second enlarged opening **1220.** In an alternative example (not shown), the geometry of the sipe **930** may be such that the minor segments maintain the same thickness when an acceleration force is applied to a tire.

In the illustrated example, when a sufficient acceleration force **F_{A}** is applied to a tire, the second elongated wall **1020** contacts the first elongated wall **1015,** substantially reducing the thickness of the first major segment to zero. Similarly, the third elongated wall **1030** contacts the fourth elongated wall **1025,** substantially reducing the thickness of the second major segment to zero. It should be understood that when a lesser acceleration force is applied, the tread block **920** may be deformed such that the elongated segments of the sipe **930** are reduced, but not eliminated. Further, in an alternative example (not shown), the tread block **920** may be sufficiently rigid such that the elongated segments of the sipe **930** are never eliminated, but merely reduced.

In the above described example, when an acceleration force **F_{A}** is applied to a tire, the first and second enlarged openings **1210, 1220** create sipe edges that remain exposed to a road surface. This results in improved tire traction for accelerating in snowy, wet, or other slippery conditions.

Although only laterally segmented sipes having three major segments have been illustrated, it should be understood that in an alternative example (not shown), a laterally segmented sipe may have two major segments and one minor segment. In other alternative examples (not shown), a laterally segmented sipe may have four or more major segments. For example, in one example (not shown), a laterally segmented sipe may have four major segments and three minor segments. In another example (not shown), a laterally segmented sipe may have five major segments and four minor segments. In yet another example, a laterally segmented sipe may have n major segments and **n-1** minor segments. It should also be understood that a tire may have sipes of varying length with a varying number of segments. For example, in one example (not shown), half of the sipes of a tire may have two major segments and half of the sipes may have three major segments.

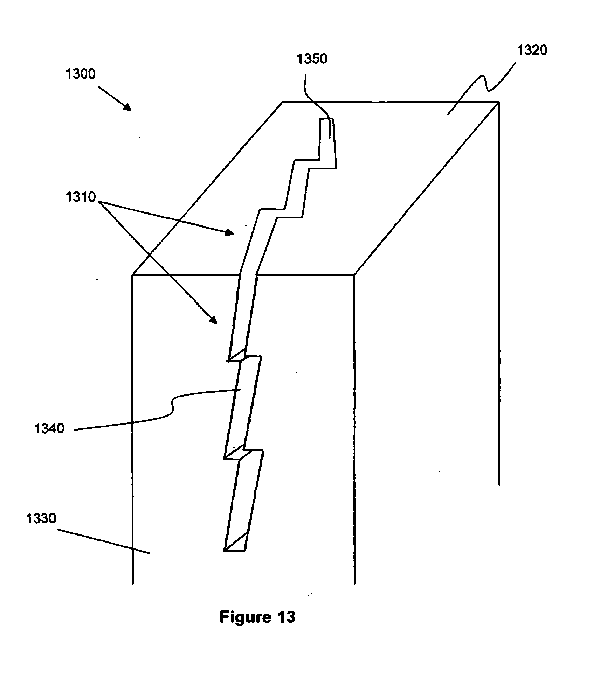

**Figure 13** illustrates a perspective view of a tread block **1300** having a segmented sipe **1310** that is segmented two directions. The tread block **1300** may be any regular or irregular polyhedron and includes at least a top surface **1320** defining a top surface of a circumferential tread of a tire, and a side surface **1330** defining a groove in the circumferential tread. The segmented sipe **1310** includes a radially segmented portion **1340** defined by a plurality of elongated walls and minor walls similar to the various embodiments of laterally segmented sipes **305, 605** described above in relation to **Figures 3-8****.** The segmented sipe **1310** further includes a laterally segmented portion **1350** defined by a plurality of elongated walls and minor walls similar to the various embodiments of laterally segmented sipes **930** described above in relation to **Figures 9-12****.**

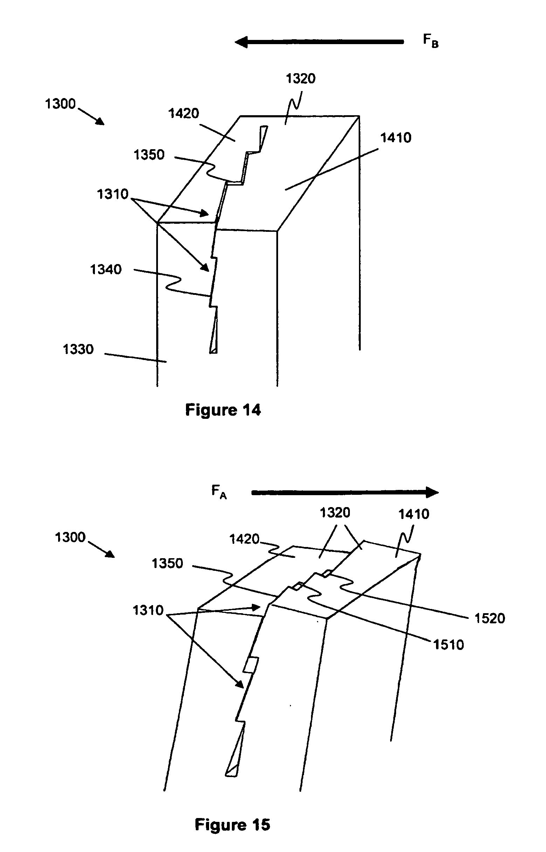

**Figure 14** illustrates a perspective view of the tread block **1300** having a sipe **1310** segmented in two directions, under a braking condition. The geometry of the segmented sipe **1310** will cause the tread block to deform when a braking force **F_{B}** is applied, as described above in relation to **Figures 4****,** **7****,** and **11****.** In other words, the sipe opening in the top surface **1320** closes, and a forward portion **1410** of the top surface **1320** is only slightly displaced with respect to a rearward portion **1420** of the top surface **1320.** Because the minor walls of the radially segmented portion **1330** are contacting each other, as describe above in **Figures 4** and **7****,** the radially segmented portion **1330** is closed and the tread block **1300** cannot be further deformed. In other words, the sipe is locked and the tread block **1300** becomes rigid such that the forward portion **1410** of the top surface **1320** cannot be further displaced. Because the tread block **1300** is more rigid and because the sipe openings in the top surface **1320** are substantially eliminated when a braking force is applied to a tire, more of the tread surface stays in contact with a road surface. This results in improved tire traction for braking, especially on a dry surface, thus reducing stopping distance.

**Figure 15** illustrates a perspective view of the tread block **1300** having a sipe **1310** segmented in two directions, under an acceleration condition. The geometry of the segmented sipe **1310** will cause the tread block to deform when an acceleration force **F_{A}** is applied, as described above in relation to **Figures 5****,** **8****,** and **12****.** In other words, when an acceleration force **F_{A}** is applied to a tire, the forward portion **1410** of the top surface **1320** is displaced relative to the rear portion **1420.** The sipe does not lock into position, so the tread block **1300** has less rigidity when it is in an acceleration condition. When the acceleration force is increased, the tread block **1300** is further deformed, and the displacement of the forward portion **1410** is increased, thereby reducing the surface area of the tread that is exposed to a road surface. Additionally, when an acceleration force **F_{A}** is applied to a tire, first and second enlarged openings **1510, 1520** in the laterally segmented portion **1350** are created, resulting in additional edges exposed to a road surface. This results in improved tire traction for accelerating in snowy, wet, or other slippery conditions.

The tires and tread blocks described above and illustrated in **Figures 1-15** can be produced in a variety of ways. One exemplary production method includes the use of a tire vulcanization mold. The mold includes tread imparting structure configured to form a tread onto a green tire being molded. The tread imparting structure can include one or more sipe-forming elements. In one embodiment, the tread imparting structure includes one or more blades that protrude outward from a base surface.

In various embodiments, the sipe forming elements have segmented shapes corresponding to the sipes described in the embodiments above. For example, in one embodiment, at least one of the sipe forming elements has a plurality of segments including at least a first major segment, a second major segment, and a minor segment extending from one end of the first major segment of the sipe forming element to one end of the second major segment. In another embodiment, at least one of the sipe forming elements further includes a third major segment and a second minor segment extending from one end of second major segment to one end of the third major segment. In yet another embodiment, at least one of the sipe forming elements includes **n** major segments and **n-1** minor segments.

The sipe forming elements can be arranged at certain intervals along the tire. The sipe forming elements can be provided in the mold in a variety of ways. For example, the sipe forming element can be formed as a separate component that can be inserted into the mold and secured thereto via pins. Other means to secure the sipe forming element to the mold are possible and known in the art. Alternatively, the sipe forming element can be an integral part of the mold (e.g., formed directly in the mold during casting of the mold).

To produce the tire in the mold, a green tire is first placed in the mold. To support the green tire during the molding process, a high temperature and high pressure medium is charged into a bladder (not shown). As the mold is collapsed around the green tire, the tread imparting structure is forced into the green tire. In this manner, the circumferential frame segments form one or more circumferential grooves in the outer surface of the tread of the tire. In this same manner, the sipe forming elements are forced into the green tire, thereby forming concave recesses in the outer surface of the tread of the tire.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modem Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present application illustrates various embodiments, and while these embodiments have been described in some detail, it is not the intention of the applicant to restrict or in any way limit the scope of the claimed invention to such detail. Additional advantages and modifications will readily appear to those skilled in the art. Therefore, the application, in its broader aspects, is not limited to the specific details, the representative apparatus, and illustrative examples shown and described.

## Claims

1. A tire having an equatorial plane and a circumferential tread, the tire comprising:
at least one tread block (300) having a sipe (305), the sipe (305) having at least three segments, including a first major segment (320, 325), a second major segment (330, 335), and a minor segment (350, 355) having a first end connected to the first major segment (320, 325) and a second end connected to the second major segment (330, 335), such that the first major segment (320, 325) and second major segment (330, 335) extend in a substantially radial direction,
**characterized in that**
the minor segment (350, 355) is substantially parallel to a top surface (315) of the tread block (300).

2. The tire of claim 1, wherein the first major segment (320, 325) is substantially parallel to the second major segment (330, 335).

3. The tire of claim 2, wherein the first major segment (320, 325) forms an obtuse angle with a forward portion of the top surface (315) of the tread block (300) and an acute angle with a rearward portion of the top surface (315) of the tread block (300).

4. The tire of claim 1, wherein each of the first major segment (320, 325), the second major segment (330, 335), and the minor segment (350, 355) is a linear segment.

5. The tire of claim 1, wherein the sipe (305) further includes a third major segment (340, 345) and a second minor segment (360, 365) having a first end connected to the second major segment (330, 335) and a second end connected to the third major segment (340, 345).

6. The tire of claim 5, wherein the first major segment (320, 325) forms an obtuse angle with a forward portion of the top surface (315) of the tread block (300).

7. The tire of claim 6, wherein the first major segment (320, 325) is substantially parallel to the second major segment (330, 335) and to the third major segment (340, 345).

8. The tire of claim 1, wherein the tread block (300) is configured to deform when a braking force is applied to the tread block (300), such that a thickness of the sipe (305) is substantially reduced.

9. The tire of claim 1, wherein the tread block (300) is configured to deform when an acceleration force is applied to the tread block (300), such that a thickness of the first major segment (320, 325) is reduced and a thickness of the minor segment (350, 355) is enlarged.

10. A vulcanization mold for the production of a tire, the mold comprising:
a mold housing having a circumferential cavity with a tread defining surface, and tread imparting structure configured to form a tread in a green tire;
the tread imparting structure having at least one blade configured to create a sipe in the tread of the green tire, the blade having a plurality of segments including at least a first major segment, a second major segment, and a minor segment extending from one end of the first major segment of the blade to one end of the second major segment,
**characterized in that**
the minor segment of the blade of the tread imparting structure is substantially parallel to the tread defining surface.

11. The vulcanization mold of claim 10, wherein the tread imparting structure further includes a third major segment and a second minor segment extending from one end of second major segment to one end of the third major segment.

12. The vulcanization mold of claim 11, wherein the minor segment is parallel to the second minor segment.

## Patentansprüche

1. Reifen mit einer Äquatorialebene und einer Umfangslauffläche, wobei der Reifen umfasst:
mindestens einen Profilblock mit einem Einschnitt (305), wobei der Einschnitt (305) mindestens drei Segmente aufweist, welche ein erstes größeres Segment (320, 325), ein zweites größeres Segment (330, 335) und ein kleineres Segment (350, 355), welches ein erstes mit dem ersten größeren Segment (320, 325) verbundenes Ende und ein zweites mit dem zweiten größeren Segment (330, 335) verbundenes Ende umfasst, umfassen, so dass sich das erste größere Segment (320, 325) und das zweite größere Segment (330, 335) in einer im Wesentlichen radialen Richtung erstrecken,
**dadurch gekennzeichnet,**
**dass** das kleinere Segment (350, 355) im Wesentlichen parallel zu einer oberen Oberfläche (315) des Profilblocks (300) liegt.

2. Reifen nach Anspruch 1, **dadurch gekennzeichnet, dass** das erste größere Segment (320, 325) im Wesentlichen parallel zu dem zweiten größeren Segment (330, 335) liegt.

3. Reifen nach Anspruch 2, **dadurch gekennzeichnet, dass** das erste größere Segment (320, 325) einen stumpfen Winkel mit einem vorderen Abschnitt der oberen Oberfläche (315) des Profilblocks (300) und einen spitzen Winkel mit einem hinteren Abschnitt der oberen Oberfläche (315) des Profilblocks (300) bildet.

4. Reifen nach Anspruch 1, **dadurch gekennzeichnet, dass** das erste größere Segment (320, 325), das zweite größere Segment (330, 335) und das kleinere Segment (350, 355) jeweils ein geradliniges Segment ist.

5. Reifen nach Anspruch 1, **dadurch gekennzeichnet, dass** der Einschnitt (305) darüber hinaus ein drittes größeres Segment (340, 345) und ein zweites kleineres Segment (360, 365), welches ein erstes mit dem zweiten größeren Segment (330, 335) verbundenes Ende und ein zweites mit dem dritten größeren Segment (340, 345) verbundenes Ende umfasst, umfasst.

6. Reifen nach Anspruch 5, **dadurch gekennzeichnet, dass** das erste größere Segment (320, 325) einen stumpfen Winkel mit einem vorderen Abschnitt der oberen Oberfläche (315) des Profilblocks (300) bildet.

7. Reifen nach Anspruch 6, **dadurch gekennzeichnet, dass** das erste größere Segment (320, 325) im Wesentlichen parallel zu dem zweiten größeren Segment (330, 335) und dem dritten größeren Segment (340, 345) liegt.

8. Reifen nach Anspruch 1, **dadurch gekennzeichnet, dass** der Profilblock (300) derart ausgebildet ist, dass er deformiert wird, wenn eine Bremskraft auf den Profilblock (300) aufgebracht wird, so dass eine Dicke des Einschnitts (305) wesentlich verringert wird.

9. Reifen nach Anspruch 1, **dadurch gekennzeichnet, dass** der Profilblock (300) derart ausgestaltet ist, dass er deformiert wird, wenn eine Beschleunigungskraft auf den Profilblock (300) aufgebracht wird, so dass eine Dicke des ersten größeren Segments (320, 325) verringert und eine Dicke des kleineren Segments (350, 355) vergrößert wird.

10. Vulkanisierungsformwerkzeug für die Herstellung eines Reifens, wobei das Formwerkzeug umfasst:
ein Formwerkzeugaußenteil, welches einen Umfangshohlraum mit einer eine Lauffläche definierenden Oberfläche aufweist, und eine einen Reifen erzeugende Struktur, welche derart ausgestaltet ist, dass sie eine Lauffläche in einem Rohrreifen ausbildet;
wobei die einen Reifen erzeugende Struktur mindestens eine Schneide aufweist,
welche derart ausgestaltet ist, dass sie einen Einschnitt in der Lauffläche des Rohreifens erzeugt, wobei die Schneide mehrere Segmente umfasst, welche mindestens ein erstes größeres Segment, ein zweites größeres Segment und ein kleineres Segment, welches sich von einem Ende des ersten größeren Segments der Schneide zu einem Ende des zweiten größeren Segments erstreckt, umfassen,
**dadurch gekennzeichnet,**
**dass** das kleinere Segment der Schneide der einen Reifen erzeugenden Struktur im Wesentlichen parallel zu der eine Lauffläche definierenden Oberfläche liegt.

11. Vulkanisierungsformwerkzeug nach Anspruch 10, **dadurch gekennzeichnet, dass** die eine Lauffläche erzeugende Struktur darüber hinaus ein drittes größeres Segment und ein zweites kleineres Segment, welches sich von einem Ende des zweiten größeren Segments zu einem Ende des dritten größeren Segments erstreckt, umfasst.

12. Vulkanisierungsformwerkzeug nach Anspruch 11, **dadurch gekennzeichnet, dass** das kleinere Segment parallel zu dem zweiten kleineren Segment liegt.

## Revendications

1. Pneumatique ayant un plan équatorial et une bande de roulement circonférentielle, le pneumatique comprenant:
au moins un bloc de bande de roulement (300) comportant une lamelle (305), la lamelle (305) comportant au moins trois segments, comprenant un premier grand segment (320, 325), un deuxième grand segment (330, 335) et un petit segment (350, 355) ayant une première extrémité reliée au premier grand segment (320, 325) et une seconde extrémité reliée au deuxième grand segment (320, 335), de manière que le premier grand segment (330, 325) et le deuxième grand segment (330, 335) s'étendent dans une direction sensiblement radiale,
**caractérisé en ce que**
le petit segment (350, 355) est sensiblement parallèle à une surface supérieure (315) du bloc de bande de roulement (300).

2. Pneumatique selon la revendication 1, dans lequel le premier grand segment (320, 325) est sensiblement parallèle au deuxième grand segment (330, 335).

3. Pneumatique selon la revendication 2, dans lequel le premier grand segment (320, 325) forme un angle obtus avec une partie avant de la surface supérieure (315) de la bande de roulement (300) et un angle aigu avec une partie arrière de la surface supérieure (315) du bloc de bande de roulement (300).

4. Pneumatique selon la revendication 1, dans lequel le premier grand segment (320, 325), le deuxième grand segment (330, 335) et le petit segment (350, 355) sont chacun un segment linéaire.

5. Pneumatique selon la revendication 1, dans lequel la lamelle (305) comprend, en outre, un troisième grand segment (340, 345) et un second petit segment (360, 365) ayant une première extrémité reliée au deuxième grand segment (330, 335) et une seconde extrémité reliée au troisième grand segment (340, 345).

6. Pneumatique selon la revendication 5, dans lequel le premier grand segment (320, 325) forme un angle obtus avec une partie avant de la surface supérieure (315) du bloc de bande de roulement (300).

7. Pneumatique selon la revendication 6, dans lequel le premier grand segment (320, 325) est sensiblement parallèle au deuxième grand segment (330, 335) et au troisième grand segment (340, 345).

8. Pneumatique selon la revendication 1, dans lequel le bloc de bande de roulement (300) est configuré pour se déformer lorsqu'une force de freinage est appliquée sur le bloc de bande de roulement (300), de manière qu'une épaisseur de la lamelle (305) soit sensiblement réduite.

9. Pneumatique selon la revendication 1, dans lequel le bloc de bande de roulement (300) est configuré pour se déformer lorsqu'une force d'accélération est appliquée sur le bloc de bande de roulement (300), de manière qu'une épaisseur du premier grand segment (320, 325) soit réduite et qu'une épaisseur du petit segment (350, 355) soit accrue.

10. Moule de vulcanisation pour la production d'un pneumatique, le moule comprenant:
un logement de moule comportant une cavité circonférentielle ayant une surface de définition de bande de roulement, et une structure de façonnage de bande de roulement configurées pour former une bande de roulement dans un pneu vert ;
la structure de façonnage de bande de roulement comportant au moins une lame configurée pour créer une lamelle dans la bande de roulement du pneu vert, la lame comportant une pluralité de segments comprenant au moins un premier grand segment, un deuxième grand segment, et un petit segment s'étendant d'une extrémité du premier grand segment de la lame à une extrémité du deuxième grand segment,
**caractérisé en ce que**
le petit segment de la lame de la structure de façonnage de bande de roulement est sensiblement parallèle à la surface de définition de bande de roulement.

11. Moule de vulcanisation selon la revendication 10, dans lequel la structure de façonnage de bande de roulement comprend, en outre un troisième grand segment et un second petit segment s'étendant d'une extrémité du deuxième grand segment à une extrémité du troisième grand segment.

12. Moule de vulcanisation selon la revendication 11, dans lequel le petit segment est parallèle au second petit segment.
